Europäisches Patentamt

European Patent Office

Office européen des brevets

(19)

(11) **EP 0 742 452 A1**

(12) **DEMANDE DE BREVET EUROPEEN**

(43) Date de publication:
   **13.11.1996 Bulletin 1996/46**

(51) Int. Cl.$^6$: **G02B 5/08**, H01S 3/08

(21) Numéro de dépôt: **95401107.8**

(22) Date de dépôt: **12.05.1995**

(84) Etats contractants désignés:
   **CH DE GB LI**

(71) Demandeurs:
   • **COMMISSARIAT A L'ENERGIE ATOMIQUE**
     **75015 Paris Cédex 15 (FR)**
   • **ETAT FRANCAIS**
     **Représenté par le délégué général**
     **pour l'armement**
     **F-00460 Armées (FR)**

(72) Inventeurs:
   • **Robic, Jean-Yves**
     **F-38100 Grenoble (FR)**
   • **Dijon, Jean**
     **F-38800 Le Pont de Claix (FR)**

(74) Mandataire: **Dubois-Chabert, Guy et al**
   **c/o BREVATOME**
   **25, rue de Ponthieu**
   **75008 Paris (FR)**

(54) **Miroir à forte réflectivité et à large bande et procédé correspondant**

(57)   Miroir à forte réflectivité et à large bande spectrale.

Ce miroir comporte une couche métallique (42), un premier empilement (44) régulièrement alterné disposé sur la couche métallique (42) pur élargir la bande spectrale du miroir, et formé de couches (43, 45), d'un premier et d'un deuxième matériau, un second empilement (48) régulièrement alterné, pour assurer la tenue au flux du miroir, disposé sur le premier empilement (44) et formé d'au moins une paire de couches (47, 49) d'un troisième matériau ayant un troisième indice de réfraction et d'un quatrième matériau ayant un quatrième indice de réfraction, la différence entre le quatrième et le troisième indice de réfraction étant inférieure à la différence entre le premier et le second indices de réfraction.

L'invention s'applique notamment à la réalisation de lasers accordables.

FIG. 3

## Description

La présente invention a pour objet un miroir à forte réflectivité et à large bande et un procédé de réalisation d'un tel miroir selon des spécifications prédéterminées. Elle concerne plus spécialement des miroirs du type multicouches tels que ceux utilisés pour des lasers et particulièrement pour les lasers accordables.

Les miroirs utilisés pour la réflexion de lumière laser doivent présenter un certain nombre de propriétés et notamment une grande réflectivité, une bonne tenue au flux lumineux et, dans le cas des lasers accordables, une bande étendue.

De plus, le nombre de couches constituant ces miroirs doit être minimisé tant pour des raisons de réalisation technologique que de coût de fabrication.

On entend par "bande" d'un miroir la largeur du spectre de longueur d'onde (ou de fréquence) pour laquelle la réflectivité, c'est-à-dire le rapport entre l'intensité du flux réfléchi et l'intensité du flux incident est supérieur à une valeur déterminée.

Une bande étendue est importante surtout pour des lasers accordables comme par exemple les lasers à colorant.

Dans la suite de l'exposé, l'épaisseur des couches sera égale ou sensiblement égale à $\lambda o/4$.

Pour obtenir un miroir de bonne réflectivité, on réalise traditionnellement un empilement alterné de couches de deux matériaux ayant respectivement un indice de réfraction élevé et un indice de réfraction faible. L'épaisseur optique de chaque couche et définie comme le produit de l'épaisseur de la couche par l'indice de réfraction de la couche et elle est choisie égale au quart de la longueur d'onde laser $\lambda o$ devant être réfléchie.

Lorsque le miroir doit réfléchir également des ondes de longueurs d'ondes voisines mais différentes de la longueur d'onde "centrale" $\lambda o$, une bande plus étendue est recherchée. La bande d'un miroir multicouche est liée uniquement à la valeur absolue de la différence d'indice de réfraction entre les couches à fort et les couches à faible indices. Cette différence d'indice $\Delta n$ doit donc être supérieure à une valeur minimale en fonction de la largeur de bande souhaitée.

Par ailleurs, pour minimiser les pertes de lumière par absorption et répondre à la condition de tenue au flux lumineux, notamment pour les lasers de forte puissance, les matériaux constituant les couches du miroir doivent être choisis transparents autour de la longueur d'onde centrale $\lambda o$ du spectre de l'émission lumineuse.

Cette contrainte restreint fortement le choix des couples de matériaux (de fort et de faible indices de réfraction). Malheureusement, les couples de matériaux répondant à ce critère de tenue au flux, ne présentent pas une différence d'indice suffisante pour répondre également à la condition de largeur de bande évoquée précédemment.

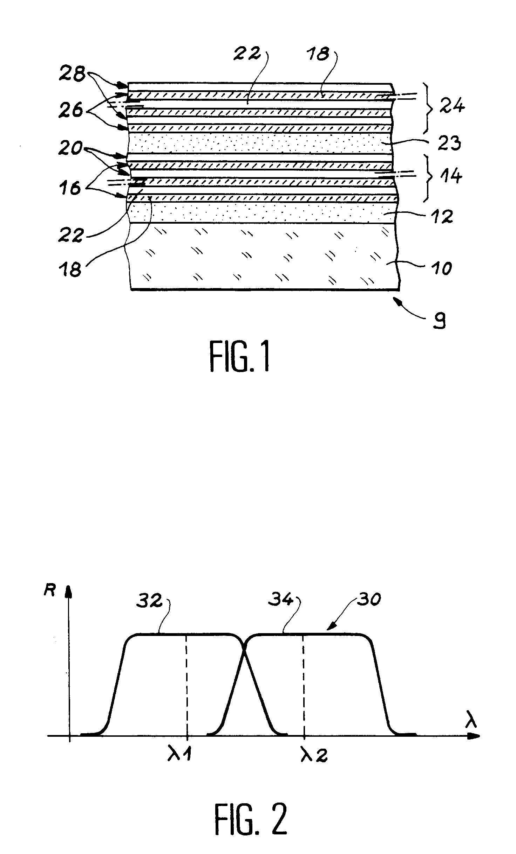

Pour réaliser des miroirs présentant à la fois une bonne réflectivité, une bonne tenue au flux et une bande convenable, il est connu de recourir à une structure comportant deux miroirs superposés dont la bande est respectivement centrée sur deux longueurs d'ondes décalées. Une telle structure est illustrée à la figure 1.

Comme on peut le voir sur cette figure, la structure 9 comporte un substrat 10, une structure d'adaptation 12 recouvrant le substrat 10, un premier miroir 14, formé d'un empilement alterné de couches 16 d'un premier matériau 18 de faible indice de réfraction et de couches 20 d'un second matériau 22 de fort indice de réfraction, les épaisseurs des couches 16, 20 étant adaptées à une réflexion centrée sur une longueur d'onde $\lambda_1$. Une seconde structure 23 d'adaptation disposée sur le premier miroir 14, le sépare d'un second miroir 24. Ce miroir 24 est également formé d'un empilement alterné de couches 26, 28 de matériaux 18 et 22, les épaisseurs des couches 26, 28 du second miroir étant adaptées à une réflexion centrée sur une longueur d'onde $\lambda_2$, décalée par rapport à $\lambda_1$.

La figure 2 illustre la réflectivité de cette structure en fonction de la longueur d'onde. On constate que la bande totale 30 de la structure résulte de la juxtaposition des bandes 32 et 34 des miroirs individuels 14 et 24. Les longueurs d'ondes centrales $\lambda_1$ et $\lambda_2$ des deux miroirs sont choisies décalées de telle sorte que la bande totale 30 ne présente pas de discontinuité notable.

Une telle structure constitue un miroir présentant des qualités intéressantes, mais n'est pas compatible avec les impératifs de coût et les rendements d'une réalisation industrielle en série.

En effet, la structure 9 comporte un nombre de couches très élevé. Le nombre de couches est au moins deux fois supérieur au nombre de couches d'un miroir simple dont la bande n'est centrée que sur une seule fréquence. A cette épaisseur, il faut encore ajouter celle des structures d'adaptation 12, 23.

La multiplication du nombre de couches conduit à des temps de fabrication et donc à des coûts de fabrication nettement plus élevés que ceux d'un miroir simple.

De plus, lorsque l'épaisseur des empilements de couches augmente, le risque de rupture mécanique de la structure vient limiter le rendement de fabrication et la tenue au flux.

La sélection de matériaux à résistance mécanique supérieure n'est guère possible dans la mesure où le choix des matériaux ayant une tenue au flux laser suffisante est déjà particulièrement restreint.

En outre, une structure constituée de deux miroirs décalés en longueur d'onde se comporte, pour des longueurs d'ondes situées dans la partie du spectre où les bandes des deux miroirs se recouvrent, comme une structure résonnante de type Pérot-Fabry, ce qui se traduit par des pertes de réflectivité dans cette partie du spectre.

Enfin, les épaisseurs des couches d'une structure à deux miroirs décalés doivent être contrôlées avec une grande précision, surtout si le décalage entre les longueurs d'ondes des miroirs n'est pas très important.

Un but de la présente invention est de fournir un miroir n'ayant pas les inconvénients ci-dessus et qui présente à la fois une grande réflectivité, une bande large centrée sur une seule longueur d'onde et une bonne tenue aux flux lasers.

A cet effet, et selon l'invention, le miroir comporte une couche métallique, un premier empilement régulièrement alterné disposé sur la couche métallique pour élargir la bande spectrale du miroir et formé d'au moins une paire de couches d'un premier matériau ayant un premier indice de réfraction et d'un deuxième matériau ayant un deuxième indice de réfraction supérieur au premier indice de réfraction ; un second empilement disposé sur le premier empilement régulièrement alterné pour assurer la tenue au flux du miroir et formé d'au moins une paire de couches d'un troisième matériau ayant un troisième indice de réfraction et d'un quatrième matériau ayant un quatrième indice de réfraction supérieur au troisième indice de réfraction, la différence entre le quatrième et le troisième indice de réfraction étant inférieure en valeur absolue à la valeur absolue de la différence entre le premier et le second indices de réfraction. Les épaisseurs des couches du premier et du second empilement sont respectivement ajustées de manière à présenter une réflectivité maximale centrée sur une longueur $\lambda$o qui est, par exemple, la longueur d'onde de la lumière laser à réfléchir.

Il faut noter que le premier et le second empilement ne sont pas accordés autour de deux longueurs d'onde décalées mais sur une même longueur d'onde. Plus précisément, pour chaque couche, l'épaisseur est telle que son produit par l'indice de réfraction du matériau de la couche soit égal au quart de la longueur d'onde centrale du spectre de réflexion. La précision requise pour les épaisseurs est cependant moins critique que la précision requise dans la réalisation de miroirs doubles décalés selon l'art antérieur.

Avantageusement, la couche métallique est déposée sur un substrat qui assure une bonne tenue mécanique du miroir et par une bonne conduction thermique.

Selon une caractéristique intéressante, le premier et le troisième matériaux peuvent être choisis identiques ; toutefois, les second et quatrième matériaux doivent être différents.

Le choix des matériaux du substrat et des empilements surtout, sont déterminés en fonction de la gamme spectrale à laquelle est destiné le miroir

Le tableau suivant donne des exemples de matériaux pouvant convenir à la réalisation des empilements, et des métaux pouvant constituer la couche métallique d'un miroir selon l'invention.

TABLEAU I

| COUCHE METALLIQUE | OR, ARGENT, PLATINE |
|---|---|
| Premier et/ou troisième matériaux | $SiO_2$, $ThF_4$ $MgF_2$, $YF_3$, $YbF_3$ cryolithe ou autres fluorures |
| Deuxième matériau | $TiO_2$, $Ta_2O_5$, Ge, Si |
| Quatrième matériau | $HfO_2$, ZnSe, $ZrO_2$ $Ta_2O_5$, ZnS |

Les matériaux utilisés pour réaliser le substrat sont avantageusement choisis parmi des matériaux ayant une bonne conductibilité thermique comme le silicium, le carbure de silicium, le diamant ou plus généralement les métaux.

En effet, il n'est pas nécessaire d'utiliser les substrats classiques, transparents dans le spectre visible et proche infrarouge, dans la mesure où le substrat ne joue ici plus de rôle de transmission optique. Le substrat est recouvert par la couche métallique.

Le nombre de couches nécessaires pour réaliser le miroir est déterminé en fonction d'un gabarit optique spécifiant la longueur d'onde centrale $\lambda$o de la bande spectrale du miroir, la largeur de cette bande, c'est-à-dire la bande du miroir, et la réflectivité minimale du miroir dans cette bande.

Plus précisément, le nombre de paires de couches $n_1$ du premier empilement est fonction de la largeur de la bande spectrale du gabarit et le nombre total N de paires de couches $n_1$ du premier empilement et de paires de couches $n_2$ du second empilement est choisi en fonction de la réflectivité du gabarit.

On calcule tout d'abord de manière classique le nombre total N de paires de couches du second empilement nécessaire pour obtenir une réflectivité à la longueur d'onde $\lambda$o supérieure ou égale à la réflectivité définie par le gabarit.

On réalise un miroir ayant une seule paire de couches dans le premier empilement et N-1 paires dans le second.

On calcule et on compare la largeur de bande de ce miroir à la largeur définie par le gabarit et on vérifie expérimentalement la tenue au flux.

Si la largeur de bande est inférieure, on réalise des miroirs où l'on remplace successivement une paire de couches du second empilement par une paire de couches de premier empilement, en vérifiant chaque fois la tenue au flux jusqu'à ce que la bande ait une largeur au moins égale à la largeur requise par le gabarit, tout en conservant la meilleure tenue au flux possible.

Chaque fois que l'on diminue le nombre de paires du second empilement (N-1, N-2, ...) et que l'on augmente celui du premier empilement, (1, 2, 3...), la bande de réflectivité du miroir s'élargit. Effectivement, la différence d'indice des couches d'une paire du premier empilement est supérieure à la différence d'indice entre les couches d'une paire du second empilement.

Ainsi, le nombre total de couches reste invariable et seul le nombre de couches se trouvant respectivement dans les premier et second empilements est ajusté jusqu'à l'obtention des caractéristiques requises par le cahier des charges et définies par le gabarit.

Les couches du second empilement présentent une bonne tenue au flux lumineux tandis que les couches du premier empilement, c'est-à-dire proches de la couche métallique, qui sont donc soumises à un flux plus modéré, contribuent à l'élargissement de la bande spectrale du miroir.

D'autres caractéristiques et avantages de l'invention ressortiront mieux de la description qui va suivre, donnée à titre purement illustratif et non limitatif.

La description se réfère aux figures annexées dans lesquelles :

-    la figure 1, déjà décrite, représente une vue schématique en coupe transversale d'un miroir double conforme à l'état de l'art,
-    la figure 2, déjà décrite, est un diagramme de la réflectivité d'un tel miroir en fonction de la longueur d'onde,
-    la figure 3 représente une vue schématique en coupe transversale d'un miroir selon l'invention, et
-    la figure 4 est un diagramme de la réflectivité d'un tel miroir, selon l'invention, en fonction de la longueur d'onde.

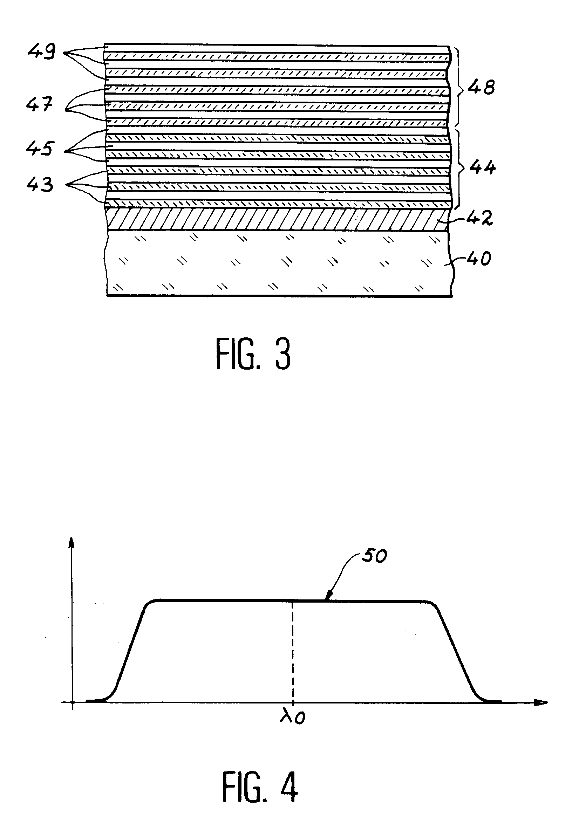

Le miroir représenté à la figure 3, comporte un substrat 40, une couche d'aluminium 42 déposée directement sur le substrat, puis, sur la couche 42, un premier empilement 44 de cinq paires de couches alternées 43, 45, respectivement de $SiO_2$ d'indice de réfraction 1,46 et de $TiO_2$ d'indice 2,4.

Sur le premier empilement 44 est déposé un second empilement 48 formé également de cinq paires de couches alternées 47, 49 respectivement de $SiO_2$ d'indice 1,46 et de $HfO_2$ d'indice 1,9.

Le miroir est centré sur une longueur d'onde $\lambda o$ de 600 nm dans le spectre visible et présente une réflectivité supérieure à 99,7% à 45° en polarisation p.

Comme on peut le voir à la figure 4, le miroir présente une bande 50 plus large que la bande du miroir de la figure 2.

Le tableau II suivant résume de façon comparative des résultats obtenus avec différents types de miroirs.

TABLEAU II

| TYPE DE MIROIR | LARGEUR DE LA BANDE SPECTRALE | NOMBRE DE PAIRES DE COUCHES |
|---|---|---|
| Miroir sans couche de métal | 30 nm | 17 |
| Miroir conforme à l'état de l'art (à longueurs d'ondes décalées) | 100 nm | 30 |
| Miroir conforme à l'invention | 110 nm | 10 |

On constate à la lecture de ce tableau, d'une part le rôle important que joue la couche métallique mais aussi la diminution notable du nombre de couches (d'un facteur 3) par rapport à un miroir classique à longueurs d'ondes décalées.

Dans l'exemple du tableau II, on vérifie pour le miroir de l'invention $n_1 = n_2 = N_{/2}$ et en particulier $n_1 = n_2 = 5$

Selon une variante, il est possible encore d'enlever une paire de couches à la surface du second empilement et/ou éventuellement d'ajouter à la surface une couche d'épaisseur optique $\lambda o/2$ de troisième matériau.

La tenue au flux en est améliorée tandis que la réponse spectrale et la réflectivité ne sont guère affectées.

## Revendications

1.  Miroir à forte réflectivité et à large bande spectrale centrée sur une longueur d'onde ($\lambda_o$) et comportant une couche métallique (42), un premier empilement (44) régulièrement alterné disposé sur la couche métallique (42) pour élargir la bande spectrale du miroir, et formé d'au moins une paire de couches (43, 45), d'un premier matériau ayant un premier indice de réfraction et d'un deuxième matériau ayant un deuxième indice de réfraction supérieur au premier indice de réfraction, un second empilement (48) régulièrement alterné, pour assurer la tenue au flux du miroir, disposé sur le premier empilement (44) et formé d'au moins une paire de couches (47, 45) d'un troisième matériau ayant un troisième indice de réfraction et d'un quatrième matériau ayant un quatrième indice de réfraction supérieur au troisième indice de réfraction, la différence entre le quatrième et le troisième indice de réfraction étant inférieure en valeur absolue à la valeur absolue de la différence entre le premier et le second indices de réfraction, et les couches (43, 45, 47, 49) du premier et du deuxième empilements (44, 48) présentant respectivement des épaisseurs adaptées à un spectre de réflexion sensiblement centré sur la longueur d'onde ($\lambda_o$).

2. Miroir selon la revendication 1, caractérisé en ce que le premier empilement (44) comporte un premier nombre de paires de couches $n_1$ et le second empilement (48) un second nombre de paires de couches $n_2$, le premier nombre de paires de couches étant fonction de la largeur de bande spectrale d'un gabarit et le nombre total de paires de couches ($N = n_1 + n_2$) étant fonction de la réflectivité dudit gabarit.

3. Miroir selon la revendication 2, caractérisé en ce que le premier nombre de paires de couches $n_1$ est égal au second nombre de paires de couches $n_2$, de sorte que

$$n_1 = n_2 = \frac{N}{2},$$

où N est le nombre total de paires de couches.

4. Miroir selon l'une quelconque des revendications 1 à 3, caractérisé en ce que le premier et le troisième matériau sont identiques.

5. Miroir selon l'une quelconque des revendications précédentes, caractérisé en ce que le premier et le troisième matériaux sont choisis parmi la silice, les composés $MgF_2$, $ThF_4$, $YF_3$, $YbF_3$ et la cryolithe et autres fluorures.

6. Miroir selon l'une quelconque des revendications précédentes, caractérisé en ce que la couche métallique est réalisée en un métal choisi parmi l'aluminium, l'or, l'argent et le platine.

7. Miroir selon l'une quelconque des revendications précédentes, caractérisé en ce que le second matériau est choisi parmi le silicium, le germanium et les composés $TiO_2$ et $Ta_2O_5$, le quatrième matériau est choisi parmi les composés $HfO_2$, $ZrO_2$, $Ta_2O_5$, ZnS et ZnSe, le second matériau étant différent du premier matériau.

8. Miroir selon l'une quelconque des revendications précédentes, caractérisé en ce qu'il comporte en outre un substrat (40), la couche métallique (42) étant déposée sur ce substrat (40).

9. Miroir selon la revendication 8, caractérisé en ce que le substrat (40) est réalisé en un matériau choisi parmi le silicium, le diamant et le carbure de silicium.

10. Miroir selon la revendication 8, caractérisé en ce que le substrat (40) est réalisé en un métal.

11. Procédé de détermination expérimentale d'un nombre de paires de couches du premier empilement et d'un nombre de paires de couches du second empilement pour l'obtention d'un miroir conforme à l'une quelconque des revendications précédentes, de réflectivité, de longueur d'onde de réflexion, et de largeur de bande déterminées, caractérisé en ce qu'il comporte les étapes successives suivantes :

a) - détermination par calcul d'un nombre total minimal de paires de couches de second empilement nécessaire pour que la réflectivité du miroir soit au moins égale à la réflectivité déterminée, à la longueur d'onde déterminée ;

b) - réalisation d'un miroir comportant un premier empilement présentant une seule paire de couches et un second empilement présentant un nombre de paires de couches égal au nombre total minimal moins un ;

c) - mesure la largeur de bande du miroir ainsi obtenu et comparaison avec la largeur de bande déterminée ;

d) - si la comparaison révèle une largeur de bande inférieure à la largeur de bande déterminée, réalisation d'un miroir comportant un premier empilement présentant une paire de couches supplémentaire et un second empilement présentant une paire de couches de moins que le miroir dont la largeur a été précédemment mesurée ;

e) - si la comparaison révèle une largeur de bande au moins égale à la largeur de bande déterminée, sélection du miroir ainsi obtenu.

FIG.1

FIG. 2

FIG. 3

FIG. 4

EP 0 742 452 A1

| | Office européen des brevets | RAPPORT DE RECHERCHE EUROPEENNE | Numero de la demande EP 95 40 1107 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 372 438 (HONEYWELL) <br> * le document en entier * <br> --- | 1,5-11 | G02B5/08 <br> H01S3/08 |
| A | EP-A-0 280 299 (MATSUSHITA ELECTRIC INDUSTRIAL) <br> * page 4; figures 1-11; tableaux 1-3 * <br> --- | 1,5-10 | |
| A | US-A-3 601 471 (R.I.SEDDON) <br> * colonne 1, ligne 52 - ligne 55; figure 1 * <br> ----- | 11 | |

| | | | DOMAINES TECHNIQUES RECHERCHES (Int.Cl.6) |
|---|---|---|---|
| | | | G02B <br> H01S |

Le présent rapport a été établi pour toutes les revendications

| Lieu de la recherche | Date d'achèvement de la recherche | Examinateur |
|---|---|---|
| LA HAYE | 2 Octobre 1995 | Malic, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

8